# DEMANDE DE BREVET EUROPEEN

(11) **EP 1 707 853 A1**
(43) Date de publication de la demande: **04.10.2006**
(21) Numéro de dépôt: 06300312.3
(22) Date de dépôt: 30.03.2006
(51) Int. Cl.: F16H 63/20, F16H 61/32

(54) **Commande interne pour boîte de vitesses**

(30) Priorité: 01.04.2005 FR 0550852
(71) Demandeur: Peugeot Citroen Automobiles SA, 78140 Vélizy-Villacoublay (FR)
(72) Inventeur: Lelasseux, Xavier, 92150 Suresnes (FR)

(57) **Abrégé**

Une commande interne (101) pour boîte de vitesses comportant un dispositif d'actionnement (111) de moyens d'engagement comprenant un organe de commande (114), un dispositif de sélection (113) desdits moyens d'engagement comprenant une structure (121) qui coopère avec ledit organe de commande au moyen d'un dispositif élastique (112) de telle sorte qu'un mouvement du dispositif de sélection (113) puisse être emmagasiné par ledit dispositif élastique alors qu'un moyen d'engagement est actionné par l'organe de commande (114). L'organe de commande (114) comporte une butée apte à entrer en contact avec une contre-butée (135) solidaire de ladite structure du dispositif de sélection (113) pour permettre de plafonner la course de libération du mouvement emmagasiné par ledit dispositif élastique, ladite butée étant en contact avec ladite contre-butée (135) tant que la présélection d'un moyen d'engagement n'est pas réalisée.

## Description

L'invention se rapporte à une commande interne pour boîte de vitesses et plus particulièrement pour une boîte de vitesses du type piloté.

Les boîtes de vitesses pilotées ont pour inconvénient de compter un mode automatique qui souffre de la comparaison en terme de rupture de couple et de temps de passage avec les boîtes de vitesses automatiques.

Le document FR 03 11 200 apporte une solution au problème de temps de passage lorsque le changement d'un rapport de vitesses nécessite un changement de moyens d'engagement, c'est-à-dire nécessite un mouvement de sélection. Le système divulgué permet, en effet, de pouvoir emmagasiner un mouvement de sélection alors que la commande interne est en phase d'actionnement d'un moyen d'engagement. Le mouvement est ainsi emmagasiné par deux moyens élastiques qui, de chaque côté du doigt de commande, permettent, respectivement en se contractant et en se détendant, de « présélectionner » un autre moyen d'engagement. Cette « présélection » est ensuite actionnée entre le moment où le doigt de commande désengage le rapport de vitesses et en réengage un autre et plus précisément lorsqu'il revient en position neutre. En effet, en position neutre, c'est-à-dire lorsque aucun rapport de vitesses n'est engagé, les moyens élastiques précontraints redeviennent libres et ainsi restituent le mouvement de sélection.

Le dispositif élastique a cependant l'inconvénient de rendre instable les mouvements du doigt de commande. En effet, lors de ladite restitution du mouvement, des mouvements d'oscillations parasitent le réengagement d'un autre rapport de vitesses. Le doigt de commande bouge le long du couloir de position neutre le temps que les moyens élastiques se stabilisent. Le temps de passage n'est alors pas optimum.

Le but de la présente invention est de pallier tout ou partie les inconvénients cités précédemment en proposant une commande interne optimisée pour diminuer le temps de passage de rapport de vitesses nécessitant une sélection des moyens d'engagement.

A cet effet, l'invention se rapporte à une commande interne pour boîte de vitesses comportant un dispositif d'actionnement de moyens d'engagement comprenant un organe de commande, un dispositif de sélection desdits moyens d'engagement comprenant une structure qui coopère avec ledit organe de commande au moyen d'un dispositif élastique de telle sorte qu'un mouvement du dispositif de sélection puisse être emmagasiné par ledit dispositif élastique alors qu'un moyen d'engagement est actionné par l'organe de commande caractérisé en ce que l'organe de commande comporte une butée apte à entrer en contact avec une contre-butée solidaire de ladite structure du dispositif de sélection pour permettre de plafonner la course de libération du mouvement emmagasiné par ledit dispositif élastique, ladite butée étant en contact avec ladite contre-butée (135) tant que la présélection d'un moyen d'engagement n'est pas réalisée.

Conformément à d'autres caractéristiques avantageuses de l'invention :
- le dispositif élastique est monté de façon concentrique par rapport à l'axe de l'organe de commande ;
- l'organe de commande comporte une pièce principale formant une collerette sur ledit axe sur laquelle est monté un doigt de commande des moyens d'engagement ;
- la pièce principale dudit organe de commande est montée solidaire en rotation et libre en translation sur ledit axe ;
- la structure du dispositif de sélection, qui est montée libre en translation et en rotation sur ledit axe, encadre partiellement le dispositif élastique et le dispositif d'actionnement ;
- le dispositif élastique comporte un moyen élastique monté entre le haut de la structure du dispositif de sélection et la pièce principale de l'organe de commande ;
- la butée de l'organe de commande est solidaire de la pièce principale et la contre-butée est solidaire du bas de la structure ;
- l'organe de commande comporte une clé d'interverrouillage montée sur la pièce principale, la butée étant montée sur ladite clé d'interverrouillage ;
- le dispositif élastique comporte un deuxième moyen élastique monté entre le bas de la structure du dispositif de sélection et la pièce principale de l'organe de commande ;
- la contre-butée est montée coaxialement au moins partiellement autour dudit deuxième moyen élastique.

L'invention se rapporte également à une boîte de vitesse pilotée pour véhicule automobile, caractérisée en ce qu'elle comporte une commande interne selon l'une des variantes précédemment citées.

D'autres particularités et avantages ressortiront clairement de la description qui en est faite ci-après, à titre indicatif et nullement limitatif, en référence aux dessins annexés, dans lesquelles :
- la figure 1 est une représentation en perspective d'une commande interne ;
- les figures 2 et 3 sont des représentations schématiques des mouvements d'un doigt de commande entre deux crosses de commande ;
- la figure 4 est une représentation en perspective d'une première variante de commande interne ;
- la figure 5 est une représentation schématique des mouvements d'une première variante de commande interne ;
- la figure 6 est une représentation en perspective d'une deuxième variante de commande interne et de ses moyens d'actionnement ;
- la figure 7 est une représentation en perspective des dispositif d'actionnement et de sélection des moyens d'engagement d'une deuxième variante de commande interne ;
- la figure 8 est une représentation en perspective de l'organe de commande d'une deuxième variante de commande interne ;
- les figures 9 et 10 sont des représentations schématiques des mouvements d'une deuxième variante de commande interne.

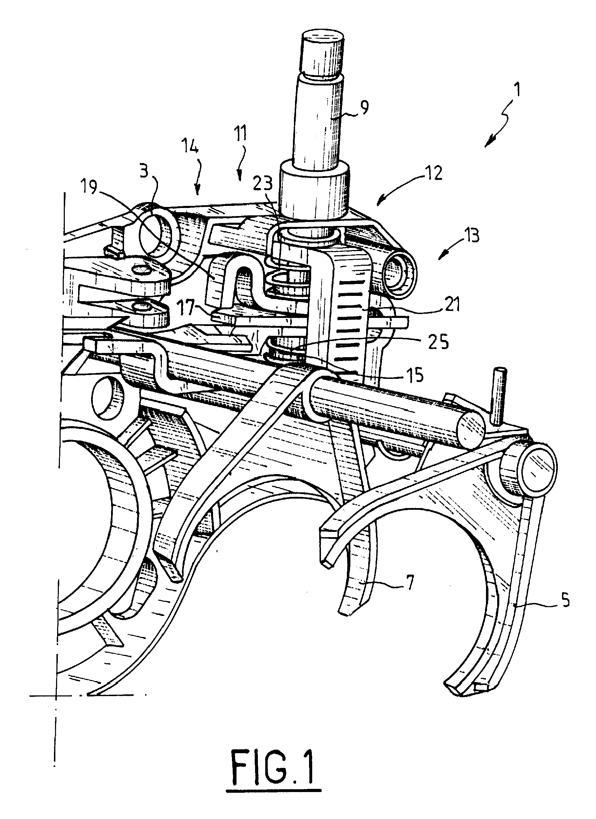

Dans l'exemple illustré à la figure 1, on peut voir une commande interne généralement annotée 1 qui est montée sur un carter 3 et reliée à des moyens d'engagement 5 et 7, communément appelés fourchettes. La commande interne 1 comporte un axe 9 à partir duquel les mouvements des dispositifs d'actionnement 11 et de sélection 13 sont réalisés. On peut voir que les dispositifs d'actionnement 11 et de sélection 13 sont reliés entre eux par un dispositif élastique 12.

Le dispositif d'actionnement 11 comporte un organe de commande 14 comprenant une pièce principale 15 sur laquelle sont montés un doigt de commande 17 et une clé d'interverrouillage 19. Une clé d'interverrouillage est utilisée pour éviter que le doigt de commande déplace deux moyens d'engagement en même temps. L'utilisation d'une clé d'interverrouillage étant très connue, elle ne sera pas d'avantage expliquée ci-après. Le dispositif de sélection 13 comporte principalement une structure 21. La commande interne 1 peut ainsi choisir un moyen d'engagement 5 ou 7 par le dispositif de sélection 13 et déplacer le moyen d'engagement choisi 5 ou 7 par le dispositif d'actionnement 11 pour engager ou désengager un rapport de vitesses. Le fonctionnement d'une commande interne avec un système de fourchetterie étant très connu, il ne sera pas d'avantage expliqué ci-après.

Le dispositif élastique 12 comporte principalement deux moyens élastiques 23 et 25 qui sont, dans l'exemple illustré à la figure 1, des ressorts du type hélicoïdal. Ils sont montés de part et d'autre de l'organe de commande 14 et de façon concentrique par rapport à l'axe 9. Préférentiellement, les moyens élastiques 23 et 25 sont montés précontraints, c'est-à-dire qu'ils leur restera chacun de l'énergie accumulée en position de repos (ou d'équilibre). Le moyen élastique 23 est ainsi monté entre le haut de la structure 21 et le haut de l'organe de commande 14 tandis que le moyen élastique 25 est monté entre le bas de la structure 21 et le bas de l'organe de commande 14.

La commande interne 1 fonctionne à l'aide de deux actionneurs pour respectivement mouvoir le dispositif d'actionnement 11 par rotation de l'axe 9 et le dispositif de sélection 13 par translation de la structure 21 le long de l'axe 9. Finalement cela permet au doigt de commande 17 d'imprimer respectivement une rotation ou une translation par rapport à l'axe 9.

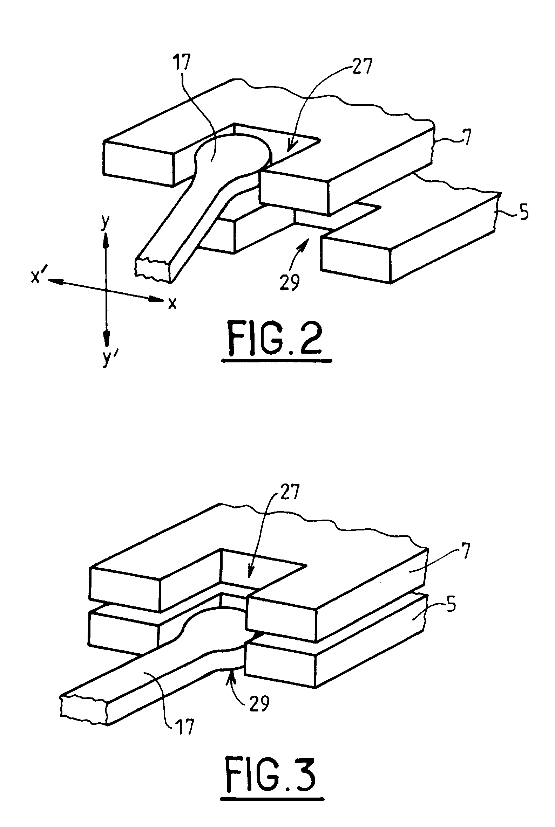

Comme illustré dans l'exemple des figures 2 et 3, les mouvements de rotation et de translation du doigt de commande 17 s'effectue respectivement autour et le long de l'axe YY' (identique à l'axe 9). Dans l'exemple illustré à la figure 2, on peut voir que le doigt de commande 17 a opéré une rotation en sens direct dans l'encoche 27 (également appelé crosse de commande). Cette rotation a induit une translation dans le sens X' du moyen d'engagement 7 qui a pour conséquence d'engager un rapport de vitesses.

Grâce au dispositif élastique 12, il est possible, lorsque le doigt de commande 17 a engagé un rapport de vitesses, de réaliser un mouvement de présélection, c'est-à-dire de précontraindre les ressorts 23 et 25 d'une hauteur égale à la translation selon YY' nécessaire pour sélectionner un autre moyen d'engagement (ici 5 dans le sens Y'). Cela est rendu possible par le déplacement de la structure 21 dans le sens Y' pour successivement empiler le doigt de commande 17 contre le haut du moyen d'engagement 5 puis contraindre lesdits ressorts.

Par conséquent, lorsque le doigt de commande 17 opère une rotation en sens rétrograde par rapport à l'axe YY' (identique à l'axe 9), il glisse sur le haut du moyen d'engagement 5 pour finalement faire face à son encoche 29. Lorsque les encoches 27 et 29 sont parfaitement alignées verticalement, les moyens d'engagement 5 et 7 sont dits au point neutre ou au point mort. Le dispositif élastique 12 peut, dans cette position, se libérer de sa contrainte et ainsi déplacer le doigt de commande 17 directement dans l'encoche 29 comme illustré dans l'exemple de la figure 3. Le doigt de commande 17 peu alors continuer sa rotation pour déplacer le moyen d'engagement 5 dans le sens X et ainsi engager un de ses rapports de vitesses.

Par conséquent, le mouvement de sélection peut être actionné en dehors de la phase de changement de rapport ce qui permet une rotation continue pour désengager et réengager les deux rapports de vitesses et donc une diminution du temps de changement de rapports lorsqu'il nécessite un changement de moyen d'engagement.

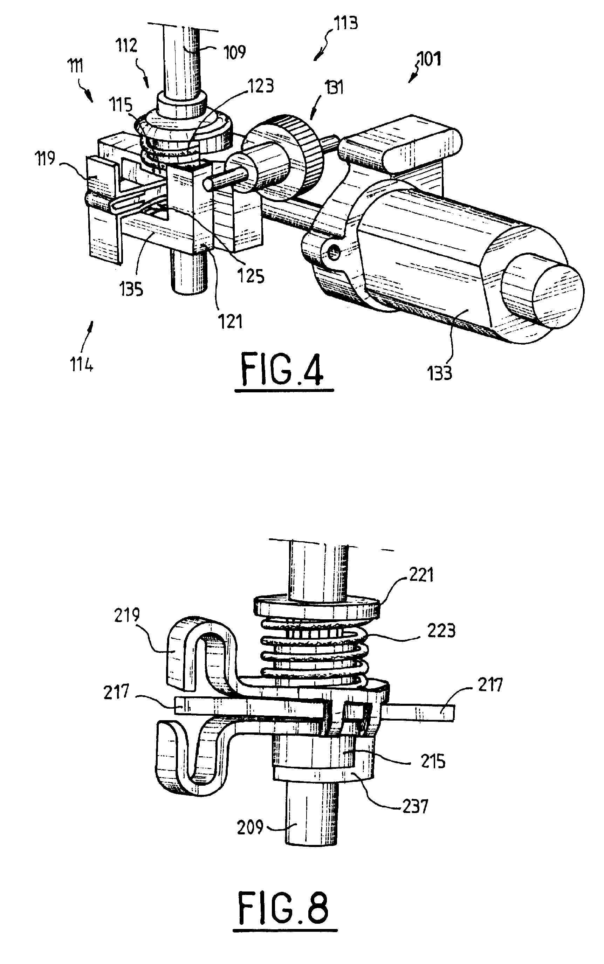

Dans l'exemple illustré à la figure 4, on peut voir une première variante de commande interne 101 selon l'invention. Le dispositif d'actionnement 111 comporte un organe de commande 114 et un moteur (non représenté) qui entraîne en rotation l'axe 109. Le dispositif de sélection 113 comporte une structure 121 recouvrant partiellement le dispositif d'actionnement 111 et un ensemble d'engrenage 131 apte à déplacer la structure 121 le long de l'axe 109 lorsque le moteur 133 est actionné. Cette construction 131 est utilisée pour garantir une liaison préférentiellement irréversible entre le moteur 133 et la structure 121.

L'organe de commande 114 comporte une pièce principale 115 sensiblement cylindrique dont le diamètre intérieur est apte à contenir l'axe 109. La pièce principale 115 est montée libre en translation mais liée en rotation par rapport à l'axe 109 grâce, par exemple, à des ensembles complémentaires du type cannelures - denture. L'organe de commande 114 comporte en outre un doigt de commande 117 et une clé d'interverrouillage 119 qui sont tous les deux montés sur la pièce principale 115. Le doigt de commande 117 est destiné à entrer en contact avec les encoches 27 et 29 (ou crosses de commande) de chaque moyen d'engagement respectivement 7 et 5.

Dans l'exemple illustré à la figure 4, on peut voir qu'il est prévu un dispositif élastique 112 dont le fonctionnement est globalement identique à celui expliqué ci-dessus. Il possède ainsi deux moyens élastiques 123 et 125 montés, préférentiellement précontraints, de façon concentriques sur l'axe 109 et entre respectivement le haute de la structure 121 et le haut de l'organe de commande 114 et le bas de la structure 121 et le bas de l'organe de commande 114. La structure 121 comporte en plus une contre-butée 135 dans sa partie basse qui est utilisée pour limiter la course de relâchement des ressorts 123 et 125.

Dans l'exemple illustré à la figure 5, on peut voir schématiquement deux positions successives de la contre-butée 135 par rapport à l'organe de commande 114 lors d'une phase de présélection. La contre-butée 135 forme une collerette, par rapport au bas de la structure 121, qui est apte à entrer en contact avec une butée 137 montée sur l'organe de commande 114. Préférentiellement, la butée 137 est aménagée sur la pièce principale 115 mais elle peut également être montée sur la clé d'interverrouillage 119.

On peut voir entre les deux positions que la structure 121 coulisse d'une hauteur A le long de l'axe 109 (non représenté). Lors de la présélection, le dispositif de sélection 113 commande un déplacement de la structure 121 qui induit dans un premier temps le déplacement de l'ensemble dispositif élastique 112 - organe de commande 114 jusqu'à ce que le doigt de commande 117 entre en contact avec le haut du moyen d'engagement 5 (première position de la figure 5). Dans un deuxième temps, le doigt de commande 117 étant bloqué contre le moyen d'engagement 5, le mouvement de la structure 121 continue seul en comprimant le ressort 123 et en étirant le ressort 125. Cela oblige alors la contre-butée 135 à quitter la butée 137 (deuxième position de la figure 5). La présélection est par conséquent réalisée.

Dans un troisième temps, le changement de rapport de vitesses est commandé et oblige à changer de moyen d'engagement (ici de 7 vers 5), lors du passage en position neutre desdits deux moyens d'engagements, comme expliqué ci-dessus, le dispositif élastique 112 se libère. Cependant, dans cette première variante, sa course est limitée à la distance entre la butée 137 et la contre-butée 135. Cela évite le caractère oscillant dû au relâchement des deux ressorts 123 et 125 du dispositif élastique 112 et permet ainsi de plus rapidement engager le rapport suivant.

Dans l'exemple illustré aux figures 6 à 10, on peut voir une deuxième variante de commande interne 201 selon l'invention. C'est une solution dite simplifiée par rapport à la première variante 101 puisqu'elle comporte un dispositif élastique 212 à un seul moyen élastique 223. Cela a pour conséquence de limiter la possibilité de présélection à un seul sens de changement de rapports, c'est-à-dire seulement les rapports montant ou descendant.

Dans l'exemple illustré à la figure 6, on peut voir la commande interne 201 selon la deuxième variante de l'invention. Elle comporte un dispositif d'actionnement 211, un dispositif de sélection 213 et le dispositif élastique 212. Le dispositif d'actionnement 211 comprend un organe de commande 214 solidaire en rotation d'un axe 209 et un moteur 241 qui, par l'intermédiaire d'un ensemble d'engrenage 239, peut déplacer en rotation l'axe 209. Le dispositif de sélection 213 comporte une structure 221 recouvrant partiellement l'organe de commande 214 et un moteur 233 qui, par l'intermédiaire d'un ensemble d'engrenage 231, peut déplacer en translation la structure 221 le long de l'axe 209. Cette architecture est essentiellement identique à la première variante et notamment l'ensemble d'engrenage 231 est utilisé pour garantir une liaison sensiblement irréversible entre le moteur 233 et la structure 221. De plus, préférentiellement, les moteurs 233 et 241 sont montés sensiblement colinéaires.

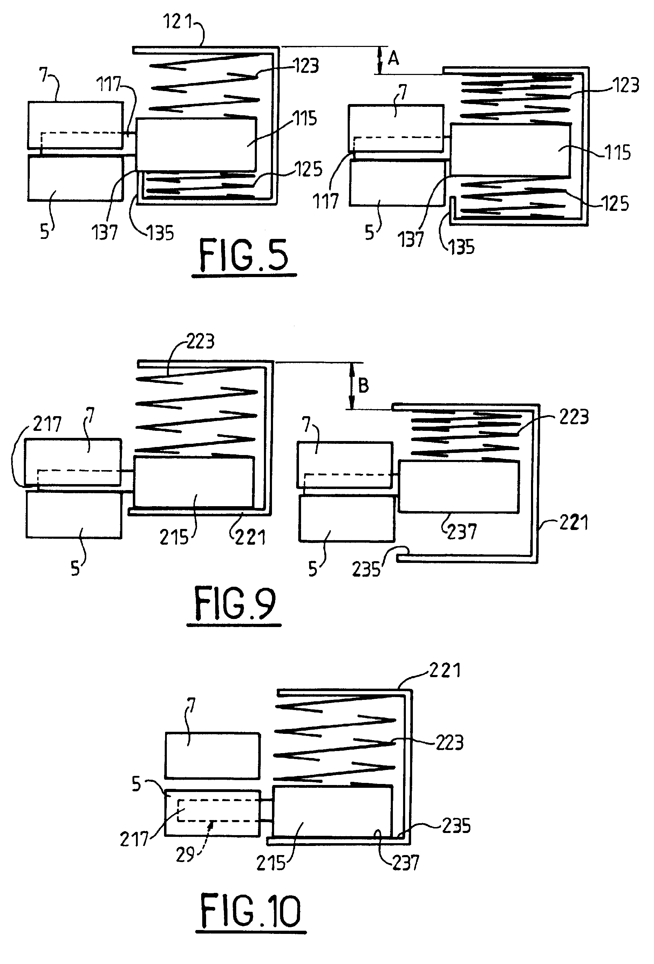

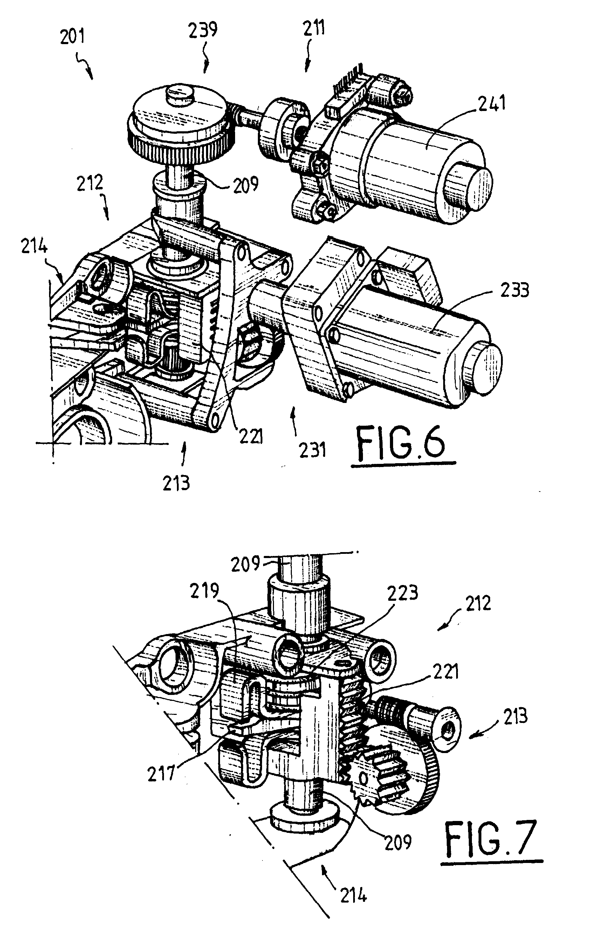

Dans l'exemple illustré aux figures 7 et 8, on peut mieux voir l'organe de commande 214 et le dispositif élastique 212. L'organe de commande 214 comporte une pièce principale 215 sur laquelle sont fixés un doigt de commande 217 et une clé d'interverrouillage 219. La pièce principale 215 comme pour la première variante est montée solidaire de l'axe 209 en rotation et libre en translation au moyen, par exemple, d'un ensemble cannelures - denture. Comme expliqué ci-dessus, le doigt de commande 217 est utilisé pour interagir avec les encoches 27 et 29 des moyens d'engagement 7 et 5 comme cela est visible sur les figures 9 et 10.

Dans l'exemple illustré à la figure 8, on se rend mieux compte du montage du dispositif élastique 212. Le moyen élastique 223 est monté coaxialement sur l'axe 209 et sur la partie haute de la pièce principale 215. Il est monté précontraint entre le haut de la structure 221 et un épaulement aménagée sur la partie supérieure de la pièce principale 215 (ou de manière alternative sur la partie supérieure de la clé d'interverrouillage 219). Sur cette figure, on peut également voir que le bas de la pièce principale 215 comporte une butée 237.

Dans l'exemple illustré aux figures 9 et 10, on peut voir schématiquement trois positions successives de l'ensemble organe de commande 214 - structure 221 par rapport à aux moyens d'engagement lors d'une phase de présélection. Une contre-butée 235 est aménagée sur le bas de la structure 221. Préférentiellement, la contre-butée 235 forme le fond de la structure 221. Elle est apte à entrer en contact avec une butée 237 montée sur l'organe de commande 214. Préférentiellement, la butée 237 est aménagée sur la pièce principale 215 mais elle peut également être montée sur la clé d'interverrouillage 219.

On peut voir entre les deux premières positions que la structure 221 coulisse d'une hauteur B le long de l'axe 209 (non représenté). Lors de la présélection, le dispositif de sélection 213 commande un déplacement de la structure 221 qui induit dans un premier temps le déplacement de l'ensemble dispositif élastique 212 - organe de commande 214 jusqu'à ce que le doigt de commande 217 entre en contact avec le haut du moyen d'engagement 5 (première position de la figure 9). Dans un deuxième temps, le doigt de commande 217 étant bloqué contre le moyen d'engagement 5, le mouvement de la structure 221 continue seul en comprimant le ressort 223. Cela oblige alors la contre-butée 235 à quitter la butée 237 (deuxième position de la figure 9). La présélection est à ce moment là réalisée.

Dans un troisième temps, le changement de rapport de vitesses est commandé et oblige à changer de moyen d'engagement (ici de 7 vers 5), lors du passage en position neutre desdits deux moyens d'engagements, comme expliqué ci-dessus, le moyen élastique 223 se détend. Cependant, dans cette deuxième variante, sa course est limitée à la distance entre la butée 237 et la contre-butée 235. Cela évite le caractère oscillant dû au relâchement du ressort 223 du dispositif élastique 212 et permet ainsi de plus rapidement engager le rapport suivant. Le relâchement permet donc de plus rapidement positionner le doigt de commande 217 dans la position illustrée à la figure 10, c'est-à-dire en face de l'encoche 29 du moyen d'engagement 5.

Bien entendu, la présente invention ne se limite pas à l'exemple illustré mais est susceptible de diverses variantes et modifications qui apparaîtront à l'homme de l'art. En particulier, deux contre-butées 135 peuvent être aménagées sur la structure 121 de part et d'autre de l'organe de commande 114 pour permettre de borner le relâchement par le dispositif élastique 112 du mouvement de présélection aussi bien en rapport montant que descendant.

## Revendications

1. Commande interne (101, 201) pour boîte de vitesses comportant un dispositif d'actionnement (111, 211) de moyens d'engagement (5, 7) comprenant un organe de commande (114, 214), un dispositif de sélection (113, 213) desdits moyens d'engagement comprenant une structure (121, 221) qui coopère avec ledit organe de commande au moyen d'un dispositif élastique (112, 212) de telle sorte qu'un mouvement du dispositif de sélection (113, 213) puisse être emmagasiné par ledit dispositif élastique alors qu'un moyen d'engagement est actionné par l'organe de commande (114, 214) **caractérisé en ce que** l'organe de commande (114, 214) comporte une butée (137, 237) apte à entrer en contact avec une contre-butée (135, 235) solidaire de la structure du dispositif de sélection (113, 213) pour permettre de plafonner la course de libération du mouvement emmagasiné par le dispositif élastique (112, 212), ladite butée (137, 237) étant en contact avec ladite contre-butée (135, 235) tant que la présélection d'un moyen d'engagement n'est pas réalisée.

2. Commande interne (101, 201) selon la revendication 1, **caractérisée en ce que** le dispositif élastique (112, 212) est monté de façon concentrique par rapport à l'axe (109, 209) de l'organe de commande (114, 214).

3. Commande interne (101, 201) selon la revendication 2, **caractérisée en ce que** l'organe de commande (114, 214) comporte une pièce principale (115, 215) formant une collerette sur ledit axe (109, 209) sur laquelle est monté un doigt de commande (117, 217) des moyens d'engagement (5, 7).

4. Commande interne (101, 201) selon la revendication 3, **caractérisée en ce que** la pièce principale (115, 215) dudit organe de commande est montée solidaire en rotation et libre en translation sur ledit axe (109, 209).

5. Commande interne (101, 201) selon la revendication 3 ou 4, **caractérisée en ce que** la structure (121, 221) du dispositif de sélection (113, 213), qui est montée libre en translation et en rotation sur ledit axe, encadre partiellement le dispositif élastique (112, 212) et le dispositif d'actionnement (111, 211).

6. Commande interne (101, 201) selon la revendication 5, **caractérisée en ce que** le dispositif élastique (112, 212) comporte un moyen élastique (123, 223) monté entre le haut de la structure (121, 221) du dispositif de sélection (113, 213) et la pièce principale (115, 215) de l'organe de commande (114, 214).

7. Commande interne (101, 201) selon la revendication 6, **caractérisée en ce que** la butée (137, 237) de l'organe de commande (114, 214) est solidaire de la pièce principale (115, 215) et la contre-butée (135, 235) est solidaire du bas de la structure (121, 221).

8. Commande interne (101, 201) selon la revendication 6, **caractérisée en ce que** l'organe de commande (114, 214) comporte une clé d'interverrouillage (119, 219) montée sur la pièce principale (115, 215), la butée (137, 237) étant montée sur ladite clé d'interverrouillage (119, 219).

9. Commande interne (101) selon la revendication 7 ou 8, **caractérisée en ce que** le dispositif élastique (112) comporte un deuxième moyen élastique (125) monté entre le bas de la structure (121) du dispositif de sélection (113) et la pièce principale (115) de l'organe de commande (114).

10. Commande interne (101) selon la revendication 9, **caractérisée en ce que** la contre-butée (135) est montée coaxialement au moins partiellement autour dudit deuxième moyen élastique.

11. Boîte de vitesse pilotée pour véhicule automobile, **caractérisée en ce qu'**elle comporte une commande interne (101, 201) selon l'une des revendications précédentes.
